# EUROPÄISCHE PATENTSCHRIFT

(11) **EP 2 843 485 B1**
(45) Veröffentlichungstag und Bekanntmachung des Hinweises auf die Patenterteilung: **20.11.2019**
(21) Anmeldenummer: 14181480.6
(22) Anmeldetag: 19.08.2014
(51) Int. Cl.: G05B 15/02, G05B 9/02

(54) **Haushaltsgerätesteuerung mit Sicherheitsfreigabeschaltung für ein Induktionskochfeld**
Domestic appliance control with safety circuit for an induction cooker
Commande d'appareil ménager avec un circuit de sécurité pour un cuisinière à induction

(30) Priorität: 27.08.2013 DE 102013217063
(43) Veröffentlichungstag der Anmeldung: 04.03.2015
(73) Patentinhaber: E.G.O. Elektro-Gerätebau GmbH, 75038 Oberderdingen (DE)
(72) Erfinder: Eberle, Michael, 75038 Oberderdingen (DE); Haag, Thomas, 68794 Oberhausen-Reinhausen (DE); Mohr, Wolfgang, 75248 Ölbronn-Dürrn (DE); Lindenfelser, Stefan, 76139 Karlsruhe (DE)
(74) Vertreter: Patentanwälte Ruff, Wilhelm, Beier, Dauster & Partner mbB

(56) Entgegenhaltungen:
- DE-A1- 19 811 065
- DE-A1- 19 857 683
- DE-A1- 19 927 635
- DE-A1-102004 005 962
- DE-A1-102006 030 546
- DE-A1-102008 029 948
- DE-U1-202012 000 084
- US-A1- 2003 191 546

## Beschreibung

Die Erfindung betrifft eine Haushaltsgerätesteuerung, beispielsweise für ein Induktionskochfeld.

In elektronischen Haushaltsgeräten kann im Kontext der so genannten funktionalen Sicherheit beispielsweise die normative Anforderung bestehen, sicherheitskritische Funktionen durch so genannte PEC-Kreise (Protective Electronic Circuit) abzusichern. Zwei Fehler innerhalb eines betrachteten Schaltungsteils dürfen nicht zu einem gefährlichen Zustand führen. PECs können in Hardware und/oder in Software ausgeführt sein. Typischerweise ergänzen sich Soft- und Hardware zu einem PEC.

Die DE 198 11 065 A1 zeigt ein Gerätesteuersystem, bei dem ein Anwendungsprozessor in Abhängigkeit von einem Spannungspegel auf einem Datenbus eine Stromversorgung eines Verbrauchers über einen Schalter zu- bzw. abschalten kann.

Der Erfindung liegt die Aufgabe zugrunde, eine Haushaltsgerätesteuerung zur Verfügung zu stellen, mittels der eine normative Anforderung an funktionale Sicherheit einfach und kostengünstig realisierbar ist.

Die Erfindung löst diese Aufgabe durch eine Haushaltsgerätesteuerung nach Anspruch 1.

Die Haushaltsgerätesteuerung, beispielsweise zur Funktionssteuerung einer Induktionsheizung, weist einen Datenübertragungsbus mit mindestens einer Signalleitung bzw. Busleitung auf. Mittels der Signalleitung bzw. Busleitung können mehrere Busteilnehmer herkömmlich zum Datenaustausch gekoppelt sein. Der Datenübertragungsbus kann ein Eindrahtbus sein. Im Übrigen sei insoweit auch auf die einschlägige Fachliteratur verwiesen.

Die Haushaltsgerätesteuerung weist weiter eine Sicherheitsfreigabeschaltung mit einem Eingang und einem Ausgang auf. Der Eingang ist mit der Signalleitung verbunden. Die Sicherheitsfreigabeschaltung ist hard- und/oder softwareseitig dazu ausgebildet ist, ein Sperrsignal am Ausgang auszugeben, wenn an dem Eingang ein zeitlich unveränderliches Signal ansteht. Unter einem zeitlich unveränderlichen Signal kann verstanden werden, dass sich das Signal innerhalb gewisser zeitlicher Grenzen, beispielsweise in einem Zeitbereich zwischen 100 ms und 60 s, nicht verändert d.h. einen konstanten Pegel aufweist.

Die Haushaltsgerätesteuerung weist weiter einen ersten Busteilnehmer auf, der mit einem Eingabe/Ausgabe-Anschluss mit der Signalleitung verbunden ist. Der Busteilnehmer ist hard- und/oder softwareseitig dazu ausgebildet, ein auf der Signalleitung anstehendes Signal zu überwachen und seinen Eingabe/Ausgabe-Anschluss in einen Zustand zu versetzen, der verhindert, dass ein zeitlich veränderliches Signal auf der Signalleitung erzeugt wird, wenn das auf der Signalleitung anstehende Signal einen nicht vorgesehenen zeitlichen Verlauf aufweist.

Die Signalleitung kann beispielsweise über einen Pull-Up-Widerstand mit einem positiven Versorgungspotential elektrisch verbunden sein. Der Eingabe/Ausgabe-Anschluss ist ein so genannter Open-Drain oder Open-Collector Anschluss, der in einem ersten Zustand den Anschluss niederohmig mit einem Bezugspotential verbindet, so dass im Ergebnis am Eingabe/Ausgabe-Anschluss und auf der Signalleitung das Bezugspotential ansteht, und der einen zweiten hochohmigen Zustand aufweist, so dass im Ergebnis am Eingabe/Ausgabe-Anschluss und auf der Signalleitung das Versorgungspotential ansteht. Im Übrigen sei insoweit auch auf die einschlägige Fachliteratur, beispielsweise zu Eindrahtbussen, verwiesen. Ein jeweiliger Busteilnehmer kann folglich dominant seinen Eingabe/Ausgabe-Anschluss in einen Zustand zu versetzen, der ein zeitlich konstantes Signal auf der Signalleitung bewirkt.

Das Überwachen, ob ein auf der Signalleitung anstehendes Signal einen nicht vorgesehenen zeitlichen Verlauf aufweist, kann auf unterschiedliche Arten erfolgen. Wenn der erste Busteilnehmer beispielsweise ein Bus-Master ist, kann er als Bus-Master einen nicht vorgesehenen zeitlichen Verlauf dann erkennen, wenn eine Kommunikation bzw. ein Signalwechsel auf der Signalleitung ohne seine Anforderung erfolgt. Ebenso kann der Bus-Master beim Erkennen von zufälligen Signalwechseln auf der Signalleitung einen nicht vorgesehenen zeitlichen Verlauf erkennen. Weiterhin können beliebige Busteilnehmer die Signale bzw. die Kommunikation auf der Signalleitung auf Plausibilität prüfen, beispielsweise durch eine CRC-Prüfung usw.

Die Haushaltsgerätesteuerung kann weiter ein ansteuerbares Schaltmittel, beispielsweise in Form eines Relais, und eine zugehörige Schaltmittelansteuereinheit bzw. Schaltmittelansteuerschaltung aufweisen. Die Schaltmittelansteuereinheit ist hard- und/oder softwareseitig dazu ausgebildet, ein Ansteuersignal für das Schaltmittel zu erzeugen.

Ein elektrischer Verbraucher, beispielsweise in Form eines Frequenzumrichters einer Induktionsheizung, ist in Abhängigkeit von einem Schaltzustand des Schaltmittels mit elektrischer Energie versorgbar oder nicht mit elektrischer Energie versorgbar. Das Schaltmittel dient folglich als Sicherheitseinrichtung, mittels der verhindert werden kann, dass der elektrische Verbraucher im Fehlerfall ungewollt mit elektrischer Energie versorgt wird.

Die Schaltmittelansteuereinheit ist hard- und/oder softwareseitig dazu ausgebildet, ein Ansteuersignal für das Schaltmittel derart zu erzeugen, dass das Schaltmittel einen solchen Schaltzustand einnimmt, dass der elektrische Verbraucher nicht mit elektrischer Energie versorgbar ist, wenn an dem Ausgang Sicherheitsfreigabeschaltung das Sperrsignal ausgegeben wird. Mit anderen Worten wird eine Versorgung des elektrischen Verbrauchers mit elektrischer Energie dann sicher unterbunden, wenn die Sicherheitsfreigabeschaltung das Sperrsignal bei zeitlich unveränderlichem Signal auf der Signalleitung ausgibt.

Der erste Busteilnehmer kann eine Bedienerschnittstelle bilden, mittels der durch einen Benutzer vorgebbar ist, ob der elektrische Verbraucher mit elektrischer Energie zu versorgen ist oder nicht.

Der Datenübertragungsbus kann ein LIN-Bus sein.

Die Sicherheitsfreigabeschaltung kann hard- und/oder softwareseitig dazu ausgebildet sein, ein Freigabesignal am Ausgang auszugeben, wenn an dem ersten Eingang ein zeitlich veränderliches Signal bzw. ein Togglesignal ansteht. Für diesen Fall kann die Schaltmittelansteuereinheit in Abhängigkeit von einem extern vorgegebenen Steuersignal den Schaltzustand des Schaltmittels frei wählen.

Die Erfindung wird nachfolgend unter Bezugnahme auf die Zeichnung detailliert beschreiben. Hierbei zeigt exemplarisch:

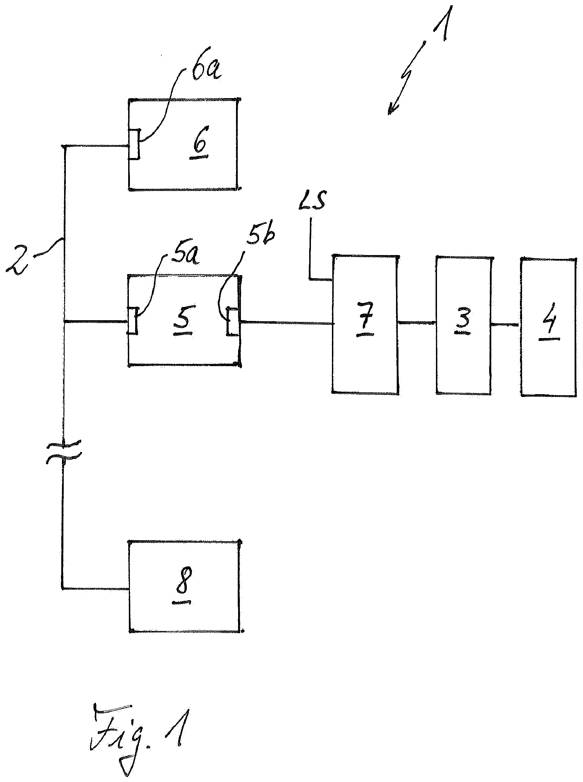

- Fig. 1: eine Haushaltsgerätesteuerung.

Fig. 1 zeigt eine Haushaltsgerätesteuerung 1 mit einem LIN-Datenübertragungsbus mit einer einzelnen Signal bzw. Busleitung 2. Hinsichtlich der LIN-Spezifikation sei auch auf die einschlägige Fachliteratur verwiesen.

Weiter ist eine Sicherheitsfreigabeschaltung 5 mit einem Eingang 5a und einem Ausgang 5b vorgesehen, wobei der Eingang 5a mit der Signalleitung 2 verbunden ist.

Die Sicherheitsfreigabeschaltung 5 gibt ein Sperrsignal an ihren Ausgang 5b aus, wenn an dem Eingang 5a ein zeitlich unveränderliches Signal ansteht, d.h. wenn auf der Signalleitung 2 keine (zyklische) Datenkommunikation stattfindet. Im Normalbetriebsfall erzeugt ein erster Busteilnehmer 6, der den Bus-Master bildet, fortlaufend eine Datenkommunikation auf dem Bus bzw. der Signalleitung 2, so dass die Sicherheitsfreigabeschaltung 5 im Normalbetriebsfall ein Freigabesignal an ihren Ausgang 5b ausgibt.

Der erste Busteilnehmer 6, der eine Bedienerschnittstelle bildet, ist mit einem Eingabe/Ausgabe-Anschluss 6a mit der Signalleitung 2 verbunden. Über den Eingabe/Ausgabe-Anschluss 6a werden im Normalbetriebsfall herkömmlich Daten ausgegeben und eingelesen. Der erste Busteilnehmer 6 ist weiter dazu ausgebildet, ein auf der Signalleitung 2 anstehendes Signal zu überwachen und im Fehlerfall seinen Eingabe/Ausgabe-Anschluss 6a auf Masse zu ziehen, wodurch die Signalleitung 2 dominant auf Masse gezogen wird, so dass die Sicherheitsfreigabeschaltung 5 in Folge das Sperrsignal an ihren Ausgang 5b ausgibt.

Die Haushaltsgerätesteuerung 1 weist weiter ein ansteuerbares Schaltmittel in Form eines Relais 3 auf, dem eine Schaltmittelansteuereinheit 7 zugeordnet ist. Die Schaltmittelansteuereinheit 7 ist mit dem Ausgang 5b der Sicherheitsfreigabeschaltung 5 verbunden und weiter mit einem Leistungsfreigabesignal LS beaufschlagt.

Die Schaltmittelansteuereinheit 7 ist dazu ausgebildet, ein schaltzustandsbestimmendes Ansteuersignal für das Relais 3 zu erzeugen.

Ein elektrischer Verbraucher 4 in Form eines Frequenzumrichters ist in Abhängigkeit von einem Schaltzustand des Relais 3 mit elektrischer Energie versorgbar ist oder nicht mit elektrischer Energie versorgbar.

Die Schaltmittelansteuereinheit 7 ist dazu ausgebildet ist, das Relais 3 bei Vorliegen des Sperrsignals derart anzusteuern, dass der elektrische Verbraucher 4 nicht mit elektrischer Energie versorgbar ist. Wenn hingegen das Freigabesignal erzeugt wird, wird der Schaltzustand des Relais 3 durch das Leistungsfreigabesignal LS bestimmt.

Mit dem Bus bzw. dessen Signalleitung 2 sind weitere Busteilnehmer verbunden, wobei exemplarisch lediglich ein weiterer Busteilnehmer 8 dargestellt ist. Der Busteilnehmer 8 kann beispielsweise das Leistungsfreigabesignal LS erzeugen.

Zur Erzeugung des Freigabesignals ist es erforderlich, dass der Eingang 5a der Sicherheitsfreigabeschaltung 5 mit einem zeitlich veränderlichen Signal d.h. einem Togglesignal beaufschlagt wird. Zur Erzeugung dieses Togglesignals wird vorliegend der LIN-Bus bzw. dessen Busleitung 2 verwendet, da übertragene Daten wie ein Togglesignal wirken.

Eingeschaltet wird dann mit einem weiteren Signal LS. Erst wenn das Togglesignal und das weitere Signal LS einen entsprechenden Zustand aufweisen, zieht das Relais 3 an.

Prinzipieller Nach- und Vorteil bei Eindrahtbussen ist, dass Daten, egal ob Senden oder Empfangen, über diesen einen Draht 2 übertragen werden. Kommt es also zu einem Fehlerfall in der Form, dass ein TX-Signal des LIN-Busses zufällig beliebig toggelt, wäre eine fehlerhafte Freigabe des Relais 3 gegeben.

Der Busteilnehmer 6 ist der Master des dargestellten Bussystems. Die Pull-Beschaltung ist dominant ausgelegt. Ohne Anforderung vom Master 6 kann es keine Kommunikation auf dem Bus bzw. dessen Busleitung 2 geben. Erkennt der Master 6 eine Kommunikation oder Signalwechsel auf der Busleitung 2 ohne seine Anforderung, kann er die Busleitung 2 auf Masse ziehen, so dass das Relais 3 einen sicheren Zustand einstellt.

Erfindungsgemäß kann das Togglesignal im Fehlerfall sicher abgeschaltet werden. Ebenso kann der Master 6 beim Erkennen von zufälligen Togglesignalen den Bus blockieren. Alternativ kann auch der weitere Busteilnehmer 8 die Kommunikation auf dem Bus auf Plausibilität prüfen und ggf. die Kommunikation durch Blockieren des Busses unterbinden.

## Patentansprüche

1. Haushaltsgerätesteuerung (1), aufweisend:
- einen Datenübertragungsbus mit einer Signalleitung (2),
- eine Sicherheitsfreigabeschaltung (5) mit einem Eingang (5a) und einem Ausgang (5b),
- wobei der Eingang (5a) mit der Signalleitung (2) verbunden ist, und
- wobei die Sicherheitsfreigabeschaltung (5) dazu ausgebildet ist, ein Sperrsignal am Ausgang (5b) auszugeben, wenn an dem Eingang (5a) ein zeitlich unveränderliches Signal ansteht, und
- einen ersten Busteilnehmer (6),
- wobei der erste Busteilnehmer (6) einen Eingabe/Ausgabe-Anschluss (6a) aufweist,
- wobei der Eingabe/Ausgabe-Anschluss (6a) mit der Signalleitung (2) verbunden ist,
- wobei der Eingabe/Ausgabe-Anschluss (6a) ein Open-Drain-Anschluss oder ein Open-Collector-Anschluss ist, der einen ersten Zustand aufweist, in dem der Eingabe/Ausgabe-Anschluss (6a) niederohmig mit einem Bezugspotential verbunden ist, und der einen zweiten hochohmigen Zustand aufweist, und
- wobei der erste Busteilnehmer (6) dazu ausgebildet ist, ein auf der Signalleitung (2) anstehendes Signal zu überwachen und seinen Eingabe/Ausgabe-Anschluss (6a) in den ersten Zustand zu versetzen, der ein zeitlich veränderliches Signal auf der Signalleitung (2) verhindert, wenn das auf der Signalleitung (2) anstehende Signal einen nicht vorgesehenen zeitlichen Verlauf aufweist.

2. Haushaltsgerätesteuerung (1) nach Anspruch 1, **gekennzeichnet durch**,
- ein ansteuerbares Schaltmittel (3),
- eine Schaltmittelansteuereinheit (7), die dazu ausgebildet ist, ein Ansteuersignal für das Schaltmittel (3) zu erzeugen, und
- einen elektrischen Verbraucher (4), der in Abhängigkeit von einem Schaltzustand des Schaltmittels (3) mit elektrischer Energie versorgbar ist oder nicht mit elektrischer Energie versorgbar ist,
- wobei die Schaltmittelansteuereinheit (7) dazu ausgebildet ist, ein Ansteuersignal für das Schaltmittel (3) derart zu erzeugen, dass das Schaltmittel (3) einen solchen Schaltzustand einnimmt, dass der elektrische Verbraucher (4) nicht mit elektrischer Energie versorgbar ist, wenn an dem Ausgang (5b) das Sperrsignal ausgegeben wird.

3. Haushaltsgerätesteuerung nach Anspruch 1 oder 2, **dadurch gekennzeichnet, dass** der erste Busteilnehmer (6) eine Bedienerschnittstelle bildet, mittels der durch einen Benutzer vorgebbar ist, ob der elektrische Verbraucher (4) mit elektrischer Energie zu versorgen ist oder nicht.

4. Haushaltsgerätesteuerung nach einem der vorhergehenden Ansprüche, **dadurch gekennzeichnet, dass** der Datenübertragungsbus ein LIN-Bus ist.

5. Haushaltsgerätesteuerung nach einem der vorhergehenden Ansprüche, **dadurch gekennzeichnet, dass** die Sicherheitsfreigabeschaltung (5) dazu ausgebildet ist, ein Freigabesignal am Ausgang (5b) auszugeben, wenn an dem Eingang (5a) ein zeitlich veränderliches Signal ansteht.

## Claims

1. Domestic appliance control (1), comprising:
- a data transmission bus having a signal line (2),
- a safety enabling circuit (5) having an input (5a) and an output (5b),
- wherein the input (5a) is connected to the signal line (2), and
- wherein the safety enabling circuit (5) is configured to output a blocking signal at the output (5b) if a signal unchanging in time is applied to the input (5a), and
- a first bus participant (6),
- wherein the first bus participant (6) has an input/output port (6a),
- wherein the input/output port (6a) is connected to the signal line (2),
- wherein the input/output port (6a) is an open-drain port or an open-collector port which has a first state, in which the input/output port (6a) is connected with low impedance to a reference potential, and which has a second high impedance state, and
- wherein the first bus participant (6) is configured to monitor a signal applied to the signal line (2) and to transfer the input/output port (6a) thereof to the first state to prevent a signal changing in time on the signal line (2) if the signal applied to the signal line (2) has a not intended temporal course.

2. Domestic appliance control (1) according to Claim 1, **characterized by**
- a controllable switching means (3),
- a switching means control unit (7) configured to generate a control signal for the switching means (3), and
- an electric consumer (4) to be supplied with electric energy or not to be supplied with electric energy as a function of a switching state of the switching means (3),
- wherein the switching means control unit (7) is configured to generate a control signal for the switching means (3) in a manner that the switching means (3) assumes such a switching state that the electric consumer (4) is not to be supplied with electric energy if the blocking signal is output at the output (5b).

3. Domestic appliance control according to Claim 1 or 2, **characterized in that** the first bus participant (6) is an operator interface by means of which an operator can predefine whether or not the electric consumer (4) is to be supplied with electric energy.

4. Domestic appliance control according to any one of the preceding Claims, **characterized in that** the data transmission bus is a LIN bus.

5. Domestic appliance control according to any one of the preceding Claims, **characterized in that** the safety enabling circuit (5) is configured to output an enabling signal at the output (5b) if a signal changing in time is applied to the input (5a).

## Revendications

1. Commande d'appareil ménager (1), comportant :
- un bus de transmission de données doté d'une ligne de signal (2),
- un circuit de validation de sécurité (5) doté d'une entrée (5a) et d'une sortie (5b),
- dans lequel l'entrée (5a) est connectée à la ligne de signal (2), et
- dans lequel le circuit de validation de sécurité (5) est conçu pour délivrer un signal de blocage à la sortie (5b) lorsqu'un signal invariant dans le temps est présent à l'entrée (5a), et
- un premier dispositif de bus (6),
- dans lequel le premier dispositif de bus (6) comporte une borne d'entrée/sortie (6a),
- dans lequel la borne d'entrée/sortie (6a) est reliée à la ligne de signal (2),
- dans lequel la borne d'entrée/sortie (6a) est une borne de drain ouvert ou une borne de collecteur ouvert présentant un premier état dans lequel la borne d'entrée/sortie (6a) est reliée avec une faible impédance à un potentiel de référence et présentant un second état à haute impédance, et
- dans lequel le premier dispositif de bus (6) est conçu pour surveiller un signal présent sur la ligne de signal (2) et pour faire passer sa borne d'entrée/sortie (6a) dans le premier état qui inhibe un signal variant dans le temps sur la ligne de signal (2) lorsque le signal présent sur la ligne de signal (2) présente une variation temporelle imprévue.

2. Commande d'appareil ménager (1) selon la revendication 1, **caractérisée par**
- un moyen de commutation commandable (3),
- une unité de commande de moyen de commutation (7) conçue pour générer un signal de commande destiné au moyen de commutation (3), et
- une charge électrique (4) qui peut être alimentée ou non en énergie électrique en fonction d'un état de commutation du moyen de commutation (3),
- dans lequel l'unité de commande de moyen de commutation (7) est conçue pour générer un signal de commande destiné au moyen de commutation (3) de manière à ce que le moyen de commutation (3) passe dans un état de commutation tel que la charge électrique (4) ne puisse pas être alimentée en énergie électrique lorsque le signal de blocage est délivré à la sortie (5b).

3. Commande d'appareil ménager selon la revendication 1 ou 2, **caractérisée en ce que** le premier dispositif de bus (6) forme une interface opérateur au moyen de laquelle il peut être déterminé à l'avance par un utilisateur si la charge électrique (4) doit ou non être alimenté en énergie électrique.

4. Commande d'appareil ménager selon l'une des revendications précédentes, **caractérisée en ce que** le bus de transmission de données est un bus LIN.

5. Commande d'appareil ménager selon l'une des revendications précédentes, **caractérisée en ce que** le circuit de validation de sécurité (5) est conçu pour délivrer un signal de validation à la sortie (5b) lorsqu'un signal variant dans le temps est présent à l'entrée (5a).
